# EUROPEAN PATENT APPLICATION

(11) **EP 2 543 883 A1**
(43) Date of publication of application: **09.01.2013**
(21) Application number: 11172718.6
(22) Date of filing: 05.07.2011
(51) Int. Cl.: F04B 19/24, F03G 7/06, G01K 5/32, G05D 23/02, G05D 23/13

(54) **Temperature responsive material driven actuator**

(71) Applicant: Rettig ICC B.V., 6199 AA Maastricht-Airport (NL)
(72) Inventor: Arvidsson, Thomas, 341 35 Ljungby (SE)
(74) Representative: Simonsson, Erik

(57) **Abstract**

A temperature responsive material driven actuator (1) comprising a housing (2) having a cavity (18), and a temperature sensing body (16) comprising a thermally conductive device (58) arranged in the cavity (18), and a temperature responsive material (22) arranged in the cavity (18) such that the temperature responsive material (22) is expandable in a main expansion direction (M) in the cavity (18) in response to a temperature change of the temperature responsive material (22), wherein the thermally conductive device (58) comprises at least one plate (20) of thermally conductive material.

## Description

### Field of the Invention

The present invention relates to a temperature responsive material driven actuator comprising a housing having a cavity. A temperature sensing body is arranged in the cavity. The temperature sensing body comprises a thermally conductive device and a temperature responsive material arranged in the cavity such that the temperature responsive material is expandable in a main expansion direction in the cavity in response to a temperature change of the temperature responsive material.

### Background Art

Actuators driven by temperature responsive materials have been widely used for many decades for self-regulation of for instance radiator valves. The nature of the temperature responsive material, i.e. the fact that the temperature responsive material expands or contracts in response to a change in temperature, is utilized for closing or opening the valve. An advantage of actuators driven by temperature responsive materials is that the process may be completely self-contained without any complex electronics being necessary. A self-regulating valve in a radiator controls the temperature of a room by regulating the flow of hot water to the radiator. Self-regulating valves using temperature responsive materials also exist for steam radiators. The temperature responsive material may be solid, liquid or gas. For instance wax may be used as temperature responsive material.

A common type of thermally responsive material driven actuator consists of a brass housing which is open in one end. The housing is filled with wax and a membrane is located at the open end of the housing. A movable actuating member is arranged at the opposite side of the membrane, with respect to the wax filled housing. The temperature of the wax changes upon a change in temperature of the housing. As the temperature of the wax increases, the wax expands and pushes on the membrane. The membrane pushes on the actuating member and displaces the actuating member linearly. In addition, when the temperature of the wax decreases, the volume of the wax is decreased, and the membrane and the actuating member are returned to their original positions by a spring arranged at the actuating member.

In order to get a faster temperature change of the wax in response to a temperature change of the housing, it is known to provide metal powder into the wax. GB 1 503 164 shows a thermally responsive material driven actuator in which a mix of wax and copper powder is used as temperature responsive material. In order to get a well defined thermal expansion it is important that the amount and distribution of copper powder is well controlled.

Preparation of wax and copper powder mixture is made by mixing copper powder and melted wax into a dough. The preparation of the dough is made batch wise. To minimize the variation of properties between different batches of wax and copper powder dough, preparation of the dough is made according to well defined recipes. A large batch of dough may be divided into several dough pieces and packed as semimanufactured dough. The semimanufactured dough is then portioned out into small moulds, usually cylindrical, each being for instance about half a cubic centimetre in size.

### Summary of the Invention

It is an object of the present invention to provide an improved actuator with a temperature responsive material having well defined properties and for which predictions of the thermally expansion of the material may be given with low tolerance. These and other objects are met by the appended independent claims. Preferred embodiments of the present invention are presented in the dependent claims.

According to a first aspect, the inventive concept relates to a temperature responsive material driven actuator comprising a housing having a cavity, and a temperature sensing body comprising a thermally conductive device arranged in the cavity, and a temperature responsive material arranged in the cavity such that the temperature responsive material is expandable in a main expansion direction in the cavity in response to a temperature change of the temperature responsive material, wherein the thermally conductive device comprises at least one plate of thermally conductive material.

An advantage of a temperature responsive material driven actuator according to the present invention is that its thermal properties may be better controlled than with prior art techniques. The shape of the thermally conductive device may be well defined and may be adjusted to the particular thermal properties necessary for the application of the actuator. A high and equal quality of several batches of temperature responsive material may be maintain since the thermally conductive device may be prepared separately from the temperature responsive material and be placed in the actuator together with the temperature responsive material in a later process step.

In comparison with temperature responsive material driven actuators having metal powder mixed in a temperature responsive material, the actuator according to the present invention has better long term properties. The metal powder tend to sink to the bottom of the actuator, or be redistributed in the actuator, as times goes by while the plate stays in place in the actuator.

One temperature sensing body may comprise one or several plates of thermally conductive material. It is possible to use several plates of different thermally conductive materials to obtain specific heat transfer characteristics. Preferably the plate or plates has a shape which corresponds to the inner shape of the housing. For instance if the housing has a cylindrical shape it may be preferred that the plate or plates are circular. Other possible shapes of the plate or plates may be elliptical or octagonal.

By temperature responsive material is meant a material or combination of materials which permit transformation of thermal energy into mechanical energy. By main expansion direction is meant the direction in which the sensing body is allowed to expand. Since the housing limits expansion in the lateral direction the main expansion direction is the direction transverse to the lateral direction.

In one embodiment a normal direction for the plate is parallel to the main expansion direction, which may facilitate assembling of the temperature responsive material driven actuator. Assembling of the temperature responsive material driven actuator may also be facilitated if the plate of thermally conductive material is stacked between plates of a temperature responsive material. Thus, prefabricated plates of thermally conductive material may be stacked onto and/or sandwiched by prefabricated plates of temperature responsive material.

Preferably, the thermally conductive device comprises at least two plates of thermally conductive material, the plates being located or laminated between plates of temperature responsive material. If two, or several more, plates of thermally conductive material are used, the temperature responsive material may be distributed between the plates and thus the thermally conductive material and the temperature responsive material becomes well distributed along the main expansion direction of the sensing body.

Preferably, a diameter of at least one of the plates corresponds to the inner diameter of the housing such that the periphery of the plate is in contact with the interior wall of the housing. Thus, heat may be efficiently transferred from the housing to the sensing body.

Alternatively, at least one of the plates of thermally conductive material comprises a continuous body. The plate may thus be made up by a filamentary continuous body which may be wounded is a spiral manner to constitute the plate. Thus, the continuous body may be spiral shaped. The spiral may be pre-loaded prior to being arranged in the actuator housing. The spiral may provide efficient physical contact between the interior wall of the actuator housing and the sensing body. The physical contact between the interior wall of the actuator housing and the plate may contribute to improved durability since the plate is better held in place instead of falling down, as times goes by.

The spiral may also be easily assembled in the housing, and/or make sure that the sensing body stays in place in the housing due to the physical contact between the spiral and the interior wall of the housing.

According to a second aspect, the inventive concept relates to a method of producing a temperature responsive material driven actuator, the method comprising having a thermally conductive device comprising a plate of thermally conductive material; preparing a temperature sensing body by at least partially embedding the plate in a temperature responsive material; and arranging the temperature sensing body in a housing in which the temperature responsive material is allowed to expand in response to a temperature change of the temperature responsive material.

Preferably, at least two plates of thermally conductive material are located or laminated between plates of temperature responsive material in the housing. Assembling of the actuator may be facilitated since prefabricated plates of temperature responsive material and prefabricated plates of a thermally conductive material may be used and piled onto each other to obtained a sandwich structure. It is possible to pile several plates of thermally conductive material directly onto each other, and/or to pile several plates of temperature responsive material directly onto each other, and/or to pile the plates such that every other plate is of thermally conductive material and temperature responsive material, respectively. Thus, from a number of thermally conductive plates and a number of temperature responsive plates it is possible to obtain different actuator characteristics depending on how the plates are combined in the actuator.

### Brief description of the Drawings

This and other aspects of the present invention will now be described in more detail, with reference to the appended drawings showing an embodiment of the present invention, in which:
Fig. 1 is a schematic side view, in cross section, of a temperature responsive material driven actuator according to the invention; and
Fig. 2 is a perspective view of the sensing body of the temperature responsive material driven actuator in Fig. 1.

### Description of Preferred Embodiments

A temperature responsive material driven actuator may be used in for instance a radiator valve for controlling a temperature of a room. The overall principle of a temperature responsive material driven actuator will be described hereunder. The actuator has a housing made of a metal with high heat conductivity, for instance brass. A sensing body, made of a temperature responsive material, is situated interior of the housing. By temperature responsive material is meant a material which expands or contracts upon a change in temperature. An example of a temperature responsive material is wax but it is also possible to use a liquid or a gas. In the embodiment of the invention described hereinafter wax is used as temperature responsive material and the temperature responsive material driven actuator will hereinafter be referred to as wax actuator or simply actuator.

An actuator member, such as a pin, is arranged at an open end of the housing. The housing limits the expansion of the sensing body in the lateral directions. Therefore, the expansion of the sensing body is transferred to linear movement of the sensing body. As the sensing body is heated it expands and pushes on the actuator member, via a membrane member arranged at the open end of the housing.

In use of a wax actuator in a radiator valve it is utilized that a certain increase in temperature of the housing, and hence of the wax, causes the wax to expand to a certain extent. The temperature of the housing and of the wax may be controlled by an electronically controlled heating element such as a PTC (Positive Temperature Coefficient) thermistor. It is also possible, in particular if other temperature responsive materials than wax are used, to let the temperature of the housing be controlled directly by the room temperature.

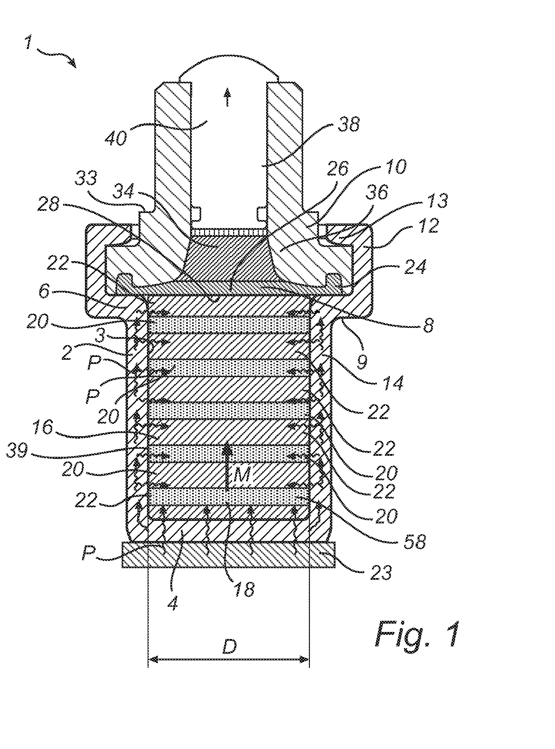

Fig. 1 illustrates an actuator 1 for use in, for instance, a thermally expandable radiator valve (not shown) for controlling the temperature of a room. For the purpose of illustration, the actuator 1 will here be described as oriented with a bottom portion 4 and a top portion 6, refereeing to the orientation of the actuator 1 in the drawings in Figs 1-2. In use, however, the actuator 1 may be oriented in any way and the function of the actuator 1 is not limited by a particular orientation of the actuator 1.

The actuator 1 shown in Fig. 1 comprises a cylindrical housing 2 made of brass. The housing 2 has an interior surface 3 and is closed at a first end 4, *i.e.* at the bottom portion 4, and sealed at a second end 6, *i.e.* at the top portion 6, by means of a membrane 8 clamped between a lid 10 and an annular shoulder 9 of the housing 2. The annular shoulder 9 of the housing 2 is continued by a circumferential edge 12 which surrounds the circumference of the lid 10. After the lid 10 has been arranged on the housing 2 the top portion of the circumferential edge 12 is bend towards the centre of the lid 10 forming an edge 13 which holds the lid 10 on the housing 2. The thickness of the housing wall 14 is about 1 mm, being equally thick at the entire housing 2.

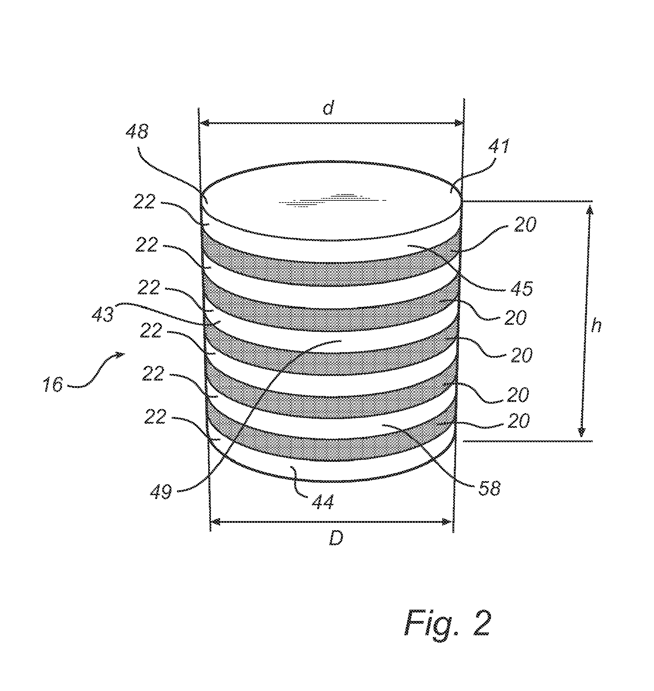

A cylindrical sensing body 16 is seated interior of the housing 2, in a housing cavity 18. The sensing body 16 fills the entire cavity 18, or nearly the entire cavity 18, of the housing 2. The sensing body 16 comprises plates made of wax 22 and plates made of a thermally conductive material such as phosphor bronze 20 which are stacked in a sandwiched structure. Thus, in the embodiment illustrated in the drawings the thermally conductive device 58 consists of the phosphor bronze plates 20. The thermally conductive device 58 may however be made of any suitable heat conductive material. A suitable size of the sensing body 16 may for instance be about 1 cm in diameter and have a height of about 1 cm. The sensing body 16 will be further described below with reference to Fig. 2.

As described above, wax 22 is used as temperature responsive material in the embodiments of the invention describe here. Wax changes from solid to liquid state, and reverse, at a temperature between 65 and 75 °C depending on for instance the composition of the wax 22 and on the surrounding pressure. The great volume expansion occurring as wax changes between solid and liquid states is utilized for the actuator stroke. It may however not be necessary to utilize the phase transition of the temperature responsive material. It is possible to use other temperature responsive materials than wax. For some temperature responsive materials or for some applications it might be enough to used the expansion of the temperature responsive material in one phase, such as liquid ethanol or any suitable gas.

A PTC thermistor 23 is arranged at the bottom portion 4 of the housing *2,* i.e. below housing 2, and is used for controlling the temperature of the housing 2 and thus of the sensing body 16. The PTC thermistor 23 may be connected to 220 V/50 Hz alternating current and is controlled by a thermostat (not shown). Thus, heat from the PTC thermistor 23 is conducted to the housing 2 via the bottom potion 4 of the housing 2. Heat from the housing walls 14 and bottom 4 is conducted to the sensing body 16. The heat transfer from the PTC therm istor 23 to the housing 2 and the sensing body 16 is illustrated by arrows P in Fig. 1.

The lid 10 serves to hold the membrane 8 in place at the open end 6 of the housing 2. The underside of the membrane periphery 24 seals against the annular shoulder 9 of the housing 2. Further, the membrane 8 has a centre portion 26 which underside is in contact with an upper surface 28 of the sensing body 16. In operation, the actuator 1 may be oriented as lying down, i.e. turned 90 degrees from the orientation illustrated in Fig. 1, and the membrane periphery 24 will thus function as a washer to seal the housing 2 and keep the wax 22, which may be liquid, inside the housing 2. The upper side of the lid 10 has elevations 33 for use for fastening the lid 10 at the housing 2, by means of fastening means (not shown).

The upper side of the membrane 8 comprises a centrally located, upwardly projecting, conical portion 34 held in an axial bore 40 of the lid 10. The axial bore 40 is shaped with a corresponding conical portion 36 which is thus occupied by the conical portion 34 of the membrane 8. The conical portion 34 of the membrane 8 may contribute to certain expansion characteristics for the actuator 1. However the membrane 8 may have another shape such as a cylindrical shape. Further, an actuation member 38, in the shape of a rod 38, is held in the axial bore 40 at the opposite side of the membrane 8 with respect to the sensing body 16. Expansion of the sensing body 16 forces the sensing body 16 to push on the membrane 8 which in turn pushes on the actuation member 38 to close the radiator valve. The actuation member 38 is pushed back by a spring member (not shown) such that the actuation member 38 may return to its original location as the volume of the sensing body 16 is decreased. Since the sensing body 16 fills the entire or nearly the entire housing 2 cavity 18, the sensing body 16 is allowed to expand mainly in one direction which direction is referred to as the main expansion direction M.

Fig. 2 shows the sensing body 16 of the actuator 1 in Fig. 1. The sensing body 16 has the shape of a circular cylinder thus having two circular base surfaces 41, one at each end portion 44, 45 of the sensing body 16, and a envelope surface 43, *i.e.* a lateral surface 43. The diameter of the sensing body 16 in Fig. 2 is denoted d. The diameter d of the sensing body 16 is adapted to fit the sensing body 16 tightly inside the housing 2 of the actuator 1 (Fig. 1). In other words, the diameter d of the sensing body 16 approximately corresponds to the inner diameter D of the cylindrical housing 2 shown in Fig. 1.

In the embodiment illustrated in here the sensing body 16 is made up by six wax plates 22 and five phosphor bronze plate 20 stacked onto each other. Thus, the sensing body is layered having a wax plate 20 at its bottom, followed by a phosphor bronze plate 20, followed by another wax plate 20, and so on.

As may be seen in Fig. 1 the interior wall 3 of the housing 2 is in physical contact with the plates 20, 22. The portions where the phosphor bronze plates 20 are in contact with the interior wall 3 of the housing 2 are referred to as contact portions 39. The physical contact between phosphor bronze plates 20 and the housing 2 provides for high heat transfer from the housing 2 to the sensing body 16 at the contact portions 39. Moreover the phosphor bronze plates 20 provides an even heat distribution throughout the sensing body 16 since the phosphor bronze plates 20 are extended throughout the entire sensing body, covering both peripheral portions 48 of the sensing body 16 as well as centre portions 49 of the sensing body 16. Thus, the heat may be transported from the housing 2 to the centre portions 49 of the sensing body 16 in an efficient way. Also, heat is well distributed along the height of the sensing body 16 since the phosphor bronze plates 20 are stacked between the wax plates 22 at even distances along the height h of the entire sensing body 16.

Assembling of the actuator 1 may be carried out by piling or stacking prefabricated plates of wax 22 and prefabricated plates of phosphor bronze 20 onto each other directly in the actuator 1 housing 2. The membrane 8, the lid 10 and the actuation member 24 are arranged at the open end 6 of the housing 2. In addition, it may be possible to prepare the sensing body 16 in a separate mould and subsequently insert the sensing body 16 into the housing 2.

It will be appreciated that numerous variants of the embodiments described above are possible within the scope of the appended claims. For example, the temperature responsive material may be any suitable temperature responsive material, for instance some suitable liquid or gas. In addition, the housing may be made of any suitable material. The size of the actuator of the sensing body may be any suitable size. As mentioned above it is not necessary that the thermally conductive device is made by phosphor bronze but the thermally conductive device may be made of any suitable heat conductive material, for instance copper.

It is possible to use any suitable number of plates of thermally conductive material. For instance, only one plate of thermally conductive material may be used, which plate is then sandwiched in wax. It is also possible to use several different material for different thermally conductive plates, for instance two plates of phosphor bronze and two plates of another thermally conductive material. The thickness of the individual plates may vary.

## Claims

1. A temperature responsive material driven actuator (1) comprising
- a housing (2) having a cavity (18), and
- a temperature sensing body (16) comprising
- a thermally conductive device (58) arranged in the cavity (18), and
- a temperature responsive material (22) arranged in the cavity (18) such that the temperature responsive material (22) is expandable in a main expansion direction (M) in the cavity (18) in response to a temperature change of the temperature responsive material (22),
**characterized in tha**t the thermally conductive device (58) comprises at least one plate (20) of thermally conductive material.

2. A temperature responsive material driven actuator (1) according to claim 1, wherein a normal direction (N) for said plate (20) is parallel to said main expansion direction (M).

3. A temperature responsive material driven actuator (1) according to anyone of the preceding claims, wherein said plate (20) is stacked between plates (22, 22) of a temperature responsive material.

4. A temperature responsive material driven actuator (1) according to anyone of the preceding claims, wherein the thermally conductive device comprises at least two plates (20) of thermally conductive material, said plates (20) being located or laminated between plates (22) of temperature responsive material.

5. A temperature responsive material driven actuator (1) according to anyone of the preceding claims, wherein a diameter d of at least one of said plates (20) corresponds to the inner diameter D of the housing (2) such that the periphery of the plate (20) is in contact with the interior wall (3) of the housing (2).

6. A temperature responsive material driven actuator (1) according to anyone of the preceding claims, wherein at least one of the plates (20) of thermally conductive material comprises a continuous body.

7. A temperature responsive material driven actuator (1) according to claim 6, wherein the continuous body is spiral shaped.

8. Method of producing a temperature responsive material driven actuator (1), the method comprising:
- having a thermally conductive device (58) comprising a plate (20) of thermally conductive material;
- preparing a temperature sensing body (16) by at least partially embedding the plate (20) in a temperature responsive material (22); and
- arranging the temperature sensing body (16) in a housing (2) in which the temperature responsive material (22) is allowed to expand in response to a temperature change of the temperature responsive material (22).

9. Method according to claim 8, wherein at least two plates (20) of thermally conductive material are located or laminated between plates (22) of temperature responsive material in said housing (2).
